# EUROPEAN PATENT APPLICATION

(11) **EP 1 795 097 A1**
(43) Date of publication of application: **13.06.2007**
(21) Application number: 06125269.8
(22) Date of filing: 01.12.2006
(51) Int. Cl.: A47J 37/12

(54) **Fryer**

(30) Priority: 12.12.2005 IT MO20050331
(71) Applicant: ANGELO PO GRANDI CUCINE S.p.A., 41012 Carpi (MO) (IT)
(72) Inventor: Silvestri, Nello, 41012, Carpi (MO) (IT)
(74) Representative: Luppi, Luigi

(57) **Abstract**

A fryer comprises tank means (1; 11; 42; 43) arranged for containing a liquid arranged for frying a food product and heating means (7; 17) arranged for heating said liquid, said heating means (7; 17) is associated with an external surface (2; 12, 16, 19) of said tank means.

## Description

The invention relates to a fryer arranged for frying food products.

Fryers are known provided with a suitably shaped tank, which is arranged for being partially filled with a liquid for frying, for example a vegetable oil.

These fryers comprise an extractable basket, that is positionable in the aforesaid tank, and that is arranged for containing, during frying, the food product and for enabling, at the end of frying, the food product to be extracted from the tank.

Known fryers are further provided with a heating unit comprising a plurality of electric resistances located inside the tank and arranged for being immersed, in use, in the frying oil.

The electric resistances are arranged for heating the oil to a suitable temperature for frying the food product.

A drawback of known fryers relates to the difficulty of performing cleaning of the tank.

In fact, as the resistances are positioned inside the tank, they constitute an encumbering element and make a bottom portion of the tank inaccessible, which is particularly difficult to clean.

A further drawback of known fryers consists of the significant time required to heat the oil to an operating temperature for frying.

This entails significant costs that arise from the prolonged use of electric current.

An object of the invention is to improve fryers.

Another object is to realise fryers the cleaning of which is easy to perform.

Still another object is to obtain fryers that enable the costs that arising from the use of electric energy to be contained.

According to the invention, a fryer is provided comprising tank means arranged for containing a liquid arranged for frying a food product and heating means arranged for heating said liquid, characterised in that said heating means is associated with an external surface of said tank means.

Owing to this aspect of the invention it is possible to realise fryers that are easy to clean.

In fact, as the heating means is positioned externally with respect to the tank means it is possible to accede easily, and therefore clean, also a bottom portion of the aforesaid tank means.

Owing to the invention, it is further possible to obtain greater efficiency of the fryers with respect to known fryers.

In fact, it has been ascertained that owing to the particular position of the heating means, for a given absorbed power the time that the fryers take to heat the liquid, for example oil, to a given operating temperature is less than the time taken by known fryers, with a consequent economic benefit arising from the reduced use of electric energy.

The invention can be better understood and implemented with reference to the attached drawings in which some embodiments of the invention are shown by way of non-limiting example, in which:
Figure 1 is a schematic perspective view of a first tank associable with a first fryer;
Figure 2 is a schematic perspective view of a second tank associable with a second fryer;
Figure 3 is a schematic perspective view of the first tank of Figure 1 in a further embodiment;
Figure 4 is a schematic perspective view of the second tank in Figure 2 in a still further embodiment.

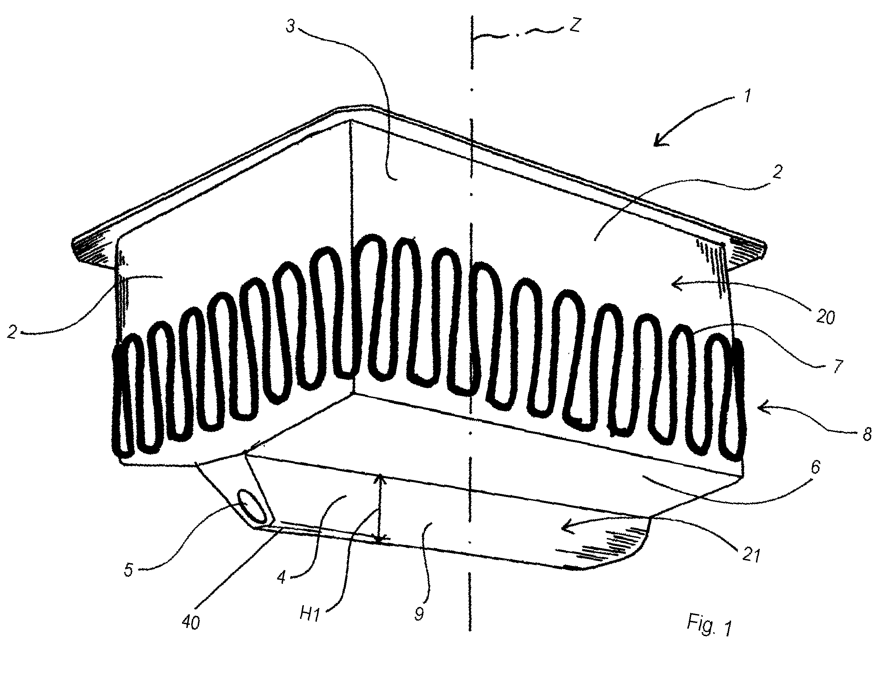

With reference to Figure 1 there is shown a first tank 1 of a fryer, that is not shown, arranged for frying a food product.

The first tank 1 is arranged for being filled, in use, with a liquid for frying, for example oil, and for receiving an extractable basket, that is not shown, arranged for containing, during frying, the food product and for enabling, at the end of frying, the food product to be extracted from the first tank.

The first tank 1 comprises a first main containing body 20 arranged for containing, in use, a prevalent quantity of the aforesaid liquid for frying.

The first main containing body 20 is bounded by a first side surface 2, having a substantially parallelepipedon shape, provided with first walls 3 that are substantially flat and are positioned, in use, substantially vertically.

The first tank 1 further comprises a first secondary containing body 21, arranged for containing, in use, a marginal quantity of the aforesaid liquid for frying.

The first secondary containing body 21 comprises a first channel 4, bounded by a first side wall 9 and by a first bottom wall 40.

The first containing body 21 further has an average height H1 measured along an axis Z.

The first channel 4 is arranged for promoting the decantation of solid fragments of the product suspended in the oil, and for enabling the oil and the aforesaid fragments to exit from the first tank 1 through a first drainage hole 5.

In this way, after evacuating the oil, it is possible to proceed with cleaning of the first tank 1 and subsequently filling the first tank 1 with new oil.

Between the first main containing body 20 and the first secondary containing body 21 there is interposed a first connecting surface 6 arranged for conveying the oil to the first secondary containing body 21, the first connecting surface 6 being tilted with respect to the first side surface 2.

The first tank 1 is further provided with first heating means 7, for example electric resistances, fixed, for example through braze welding, to a portion 8 of the first side surface 2 near the first connecting surface 6.

The first heating means 7 is arranged, in use, for heating to a desired temperature the oil contained in the first tank 1 to enable the latter to fry the food product.

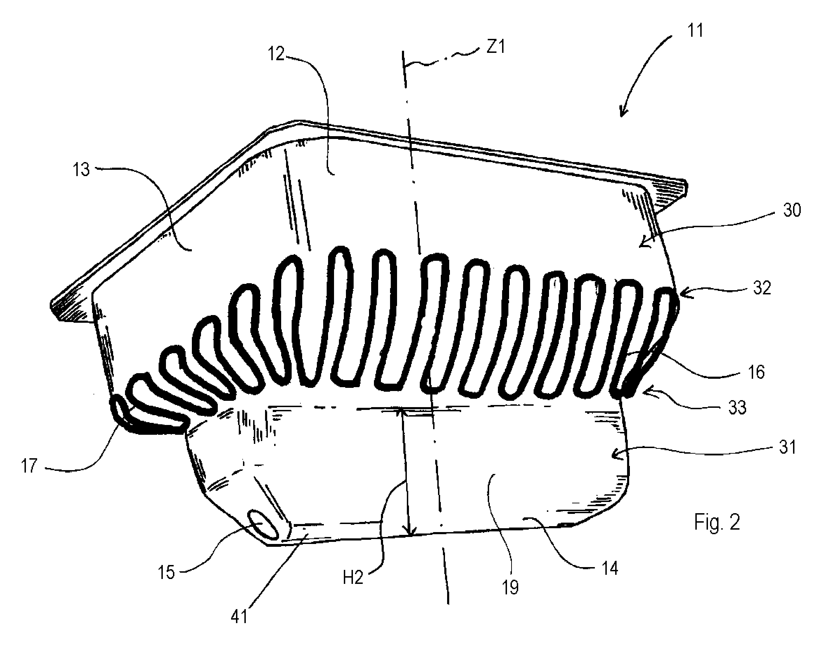

With reference to Figure 2 there is shown a second tank 11 of a second fryer that is not shown, arranged for frying a food product.

The second tank 11 is arranged for being filled in use with the liquid for frying and for receiving the extractable basket, which is not shown, arranged for containing, during frying, the food product and for enabling, at the end of frying, the food product to be extracted from the second tank.

The second tank 11 comprises a second main containing body 30 arranged for containing, in use, a prevalent quantity of the aforesaid liquid for frying.

The second main containing body 30 is bounded by a second side surface 12, having a substantially parallelepipedon shape, provided with second walls 13 that are substantially flat and are positioned, in use, substantially vertically.

The second tank 11 further comprises a second secondary containing body 31, arranged for containing, in use, a marginal quantity of the aforesaid liquid for frying.

The second secondary containing body 31 comprises a second channel 14, bounded by a second side wall 19 and by a second bottom wall 41.

The second secondary containing body 31 furthermore has an average height H2 measured along a further axis Z1, the further average height H2 being greater than the average height H1.

In this way, with the same total height of the first tank 1 and of the second tank 11, the first walls 3 have a height that is greater in extent than the second walls 13.

The second channel 14 is arranged for promoting the decantation of solid fragments of the food product suspended in the oil, and for enabling the oil and the aforesaid fragments to exit from the second tank 11 through a second drainage hole 15.

In this way, after evacuating the oil, it is possible to proceed to the cleaning of the second tank 11 and to subsequently filling the second tank 11 with new oil.

Between the second main containing body 30 and the second secondary containing body 31 there is interposed a second connecting surface 16 arranged for conveying the oil to the second secondary containing body 31, the second connecting surface 16 being tilted with respect to the second side surface 12.

The second tank 11 is furthermore provided with second heating means 17, for example electric resistances, fixed, for example through braze welding, substantially at a lower portion 32 of the second side surface 12 and at an upper portion 33 of the second side wall 19.

In an embodiment of the invention, which is not shown, the second heating means 17 is positioned substantially at the second connecting surface 16.

The second heating means 17 is arranged, in use, for heating to a desired temperature the oil contained in the second tank 11 to enable the latter to fry the food product.

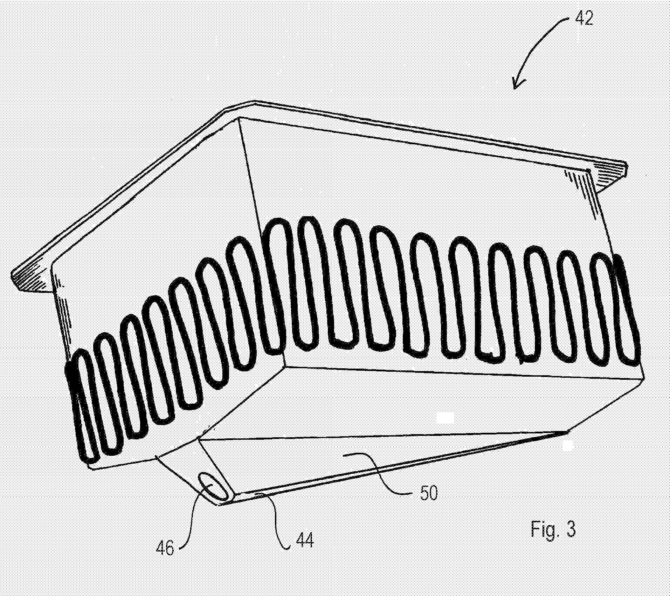

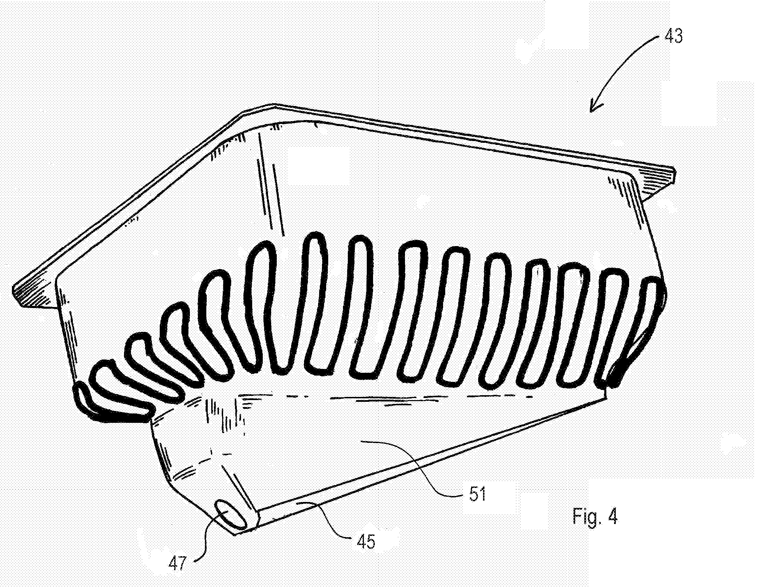

With reference to Figures 3 and 4, there is shown a third tank 42 and a fourth tank 43.

The third tank 42 and the fourth tank 43 are substantially functionally similar respectively to the first tank 1 and to the second tank 11 and for this reason they will not be disclosed in detail.

Unlike the first tank 1 and the second tank 11, the third tank 42 and the fourth tank 43 are provided with a third secondary containing body 50 and with a fourth secondary containing body 51 comprising respectively a third bottom wall 44 and a fourth bottom wall 45 tilted respectively in the direction of a third drainage hole 46 and of a fourth drainage hole 47 to facilitate the drainage of oil to a drainage pipe.

In this way, the third tank 42 and the fourth tank 43 can use drainage pipes that are substantially straight, i.e. devoid of bends.

Such drainage pipes, in addition to being particularly economical, contribute to preventing undesired stagnation of liquid that could occur at the aforesaid bends.

It should be noted that the tank 1, the second tank 11, the third tank 42 and the fourth tank 43 are easy to clean inasmuch as the respective heating means is positioned on external surfaces of the aforesaid tanks and does not constitute encumbering elements for cleaning.

It should lastly be noted that the position of the heating means increases the efficiency of the fryer.

In fact, it has been ascertained that owing to the particular positioning of the heating means, for a given absorbed power, the time that the fryers take to heat oil to a given operating temperature is less than the time taken by known fryers, with a consequent economic benefit.

## Claims

1. Fryer comprising tank means (1; 11; 42; 43) arranged for containing a liquid arranged for frying a food product and heating means (7; 17) arranged for heating said liquid, **characterised in that** said heating means (7; 17) is associated with an external surface (2; 12, 16, 19) of said tank means.

2. Fryer according to claim 1, wherein said tank means (1; 11; 42; 43) comprises a main containing body (20; 30) bounded peripherally by a side surface (2; 12), said main containing body (20; 30) being arranged for containing a prevalent quantity of said liquid.

3. Fryer according to claim 2, wherein said heating means (7; 17) is positioned on said side surface (2; 12).

4. Fryer according to claim 3, wherein said side surface (2; 12) is substantially flat.

5. Fryer according to any one of claims 2 to 4, wherein said tank means (1; 11; 42; 43) comprises a secondary containing body (21; 31; 50; 51) arranged for containing a marginal quantity of said liquid, and a connecting surface (6; 16) interposed between said secondary containing body (21; 31) and said main containing body (20; 30), said connecting surface being tilted with respect to said side surface (2; 12).

6. Fryer according to claim 5 wherein said heating means (7; 17) is associated with said connecting surface (6; 16).

7. Fryer according to any preceding claim, wherein said heating means (7; 17) is braze welded onto said external surface (2; 12, 16, 19).

8. Fryer according to any preceding claim, wherein said heating means comprises electric resistance means (7; 17).

9. Fryer according to any preceding claim, wherein said tank means (42; 43) comprises a bottom wall (44; 45) tilted towards a drainage hole (46; 47), said hole (46; 47) being arranged for enabling said liquid to exit from said tank means (42; 43).
